# EUROPEAN PATENT APPLICATION

(11) **EP 3 922 667 A1**
(43) Date of publication of application: **15.12.2021**
(21) Application number: 20020299.2
(22) Date of filing: 25.06.2020
(51) Int. Cl.: C08J 5/18, B65B 25/00, C08L 67/04, B32B 27/10, B32B 27/36, A23L 3/00, C08J 3/20

(54) **PROCESS FOR OBTAINING ACTIVE PACKAGES BASED ON POLYLACTIC ACID MODIFIED WITH NANO-COMPOSITE**

(30) Priority: 12.06.2020 RO 202000328
(71) Applicant: Universitatea Tehnica din Cluj-Napoca, Centrul Universitar NORD din Baia Mare, 430083 Maia Mare, Maramures (RO); Ceprohart S.A., 810019 Judet Braila (RO); National Institute of Chemistry, 1000 Ljubljana (SI); University of Camerino, 62032 Camerino (MC) (IT); Synbiotec, 62032 Camerino (MC) (IT); Andaltec, 23600 Martos (Jaén) (ES)
(72) Inventor: Peter, Anca, 430152 judet Maramures (RO); Mihaly Cozmuta, Anca, 437228 judet Maramures (RO); Nicula, Camelia, 430224 judet Maramures (RO); Mihaly Cozmuta, Leonard, 437228 judet Maramures (RO); Talasman, Catalina Mihaela, 810299 judet Braila (RO); Caprita, Florina-Cristiana, 810234 judet Braila (RO); Constantin, Constantin, 187025 judet Braila (RO); Dumitrascu, Ionut, 810415 judet Braila (RO); Drazic, Goran, SI-1291 Skofljica (SI); Bele, Marjan, SI-1000 Ljubljana (SI); Chernyshova, Elena, SI-1294 Visnja Gora (SI); Silvi, Stefania, 62022 Castelraimondo, MC (IT); Sagratini, Gianni, 62032 Camerino MC (IT); Huang, Xiaoui, KKaifeng (Henan), 475000 (CN); Kamgang, Nzekoue Astride Franks, Yaounde (CM); Peñas Sanjuán, Antonio, 23009 Jaén (ES); Calahorro Casanova, Antonio Jesús, 23008 Jaén (ES); Cano Galey, Manuela, 23009 Jaén (ES); Ramírez Rodriguez, Maria Dolores, 23640 Torredelcampo (Jaén) (ES); Verdenelli, Maria Cristina, 62010 Treia (MC) (IT); Orpianesi, Carla, 62025 Fiuminata (MC) (IT); Coman, Maria Magdalena, 62032 Camerino (MC) (IT)
(74) Representative: Stanciu, Adelina

(57) **Abstract**

The present invention refers to a process for obtaining some food active packages based on polylactic acid modified with nano-structured composite in the ratio of 0,4-4 %, which ensures the preservation of the characteristics of food such as fresh cheese and meat and extend their validity time, these packages being used both in house and mostly in feeding industry and in retail commerce. The process for obtaining an active package based on polylactic acid, according to the invention goes as follows: 10-100g of granules of polylactic acid are added to a nano-structured composite so that the mass ratio of the composite in the package is 0,4-4% doing as follows: first of all, there are made the PLA granules modified with nano-structured composite of Titan dioxide modified (Ag-TiO₂-GN 0,01-0,03 II tt) with graphene (GN) (0,01-0,03 g/10-30 g gel) and with silver nano-particles (0,03-0,05g/ 10-30 g gel); then, on the foil PLA0,4-4 it is put by hot-pressing at 50°C a sheet of paper (H) obtained from two types of celluloses, one with long fibre and one with short fibre, 1% solution of amidon, filling agent (CaCO₃), sticking agent, retension agent; then, the structure H-PLA0,4-4 is covered with probiotics by spraying using the strain *Lactobacillus plantarum.*

## Description

The present invention refers to a process for obtaining some active packages based on polylactic acid modified with nano-structured composite in the ratio of 0,4-4 %, which ensures the preservation of the organoleptic, physical-chemical and microbiologic characteristics of food such as fresh cheese and meat and extend their validity time. These packages can be used both in house and mostly at industrial level in all the operations connected with foods such as fresh cheese and meat: production, storage, transport and sail.

The food package is essential and omnipresent. It is essential because it isolates the food from the environment and preserves its qualities and it is omnipresent because almost all foods are packaged in a certain way. The main function of a food package is to maintain the safety of the foods and drinks during storage and transport and to extend their validity time controlling the permeability humidity, the gases and other volatile components such as flavours.

In order to be considered a food package, the requirements a material needs to fulfill are: flexibility, barrier properties against gases, flavours, humidity and light, established considering the variations of temperature/ humidity. Besides the above mentioned properties, an active package has other characteristics such as the antimicrobian action, the capacity to degrade the intermediary compounds appeared in the package space and the maintenance of a balance inside the package.

It is known that biopolymerics are of much interes as packaging materials because their biodegrading nature compating with their homologouses based on petrol. Among these, the polylactic acid (PLA) which is an aliphatic polyester derivatived from regenerable resourses such the fermentation of starch. It is known as packaging potential material. The packages based on polylactic acid have good mechanical, termic and biodegrading properties but their using is limited because the disadvantages they have, namely: low flexibility, low impact resistance and low barier properties.

There are also known food packages based on paper. Their disadvantage is the fact that they are weak with regard to the mechanical resistance and have low phisical and chemical stability.

It is known the patent document CN1359790(A), that refers to a food package based on polylactic acid. The disadvantage of this invention is that the package has a low flexibility and impact resistance.

The technical problem the invention wants to solve is to create a process for obtaining active food packages using polylactic acid (PLA) modified with nano-structured composite in the ratio of 0,4-4 % and paper sheet (H) made from cellulose, 1% starch solution, filling agent (CaCO₃), sticking agent, retension agent, the 0,4-0,6 HPLA being covered with probiotics by spraying containing in this way active food packages with higher flexibility, higher impact resistance, higher physical and chemical stability and improved barier properties which ensure the preservation of food products for a longer period of time in refrigeration conditions (0-10°C) and also to maintain the foods' characteristics during the preservation period.

The process for obtaining active packages based on polylactic acid modified with nano-composite according to the invention, solves the technical problem by using as a raw material for obtaining the food package a composition based on polylactic acid modified with a nano-structured composite of Titan dioxide (TiO₂) modified with graphene (GN) (0,01-0,03 g/10-30 g gel) and with silver nano-particles (Ag)(0,03-0,05g/10-30 g gel) (Ag-TiO₂-GN 0,01-0,03) in the ratio of 0,4-4 %, respectively a paper-polylactic acid structure modified with nano-structured composite of Titan dioxide (TiO₂) modified with graphene (GN) (0,01-0,03 g/10-30 g gel) and with silver nano-particles (Ag)(0,03-0,05g/10-30 g gel) (Ag-TiO₂-GN 0,01-0,03) in the ratio of 0,4-4 %.

In this way, the following active packages can be obtained depending on the combination between the above mentioned elements:
1) Polylacic acid (PLA) with composite in the ratio of 0% (PLA)
2) Polylactic acid (PLA) with composite in the ratio of ***0,4-0,6**%(*PLA0,4-0,6)
3) Polylactic acid (PLA) with composite in the ratio of 0,9-1,1% (PLA **0,9-1,1**)
4) Polylactic acid (PLA) with composite in the ratio of 2-4% (PLA2-4)
5) Paper-Polylactic acid (H-PLA)
6) Paper-Polylactic acid modified with probiotics (H-PLA-LP)
7) Paper-Polylactic acid modified with composite in the ratio of 0,4-0,6% (H-PLA0,4-0,6)
8) Paper-Polylactic acid modified with composite 0,4-0,6% modified with probiotics (H-PLA0,4-0,6)
9) Paper with composite in the ratio of 0,4-0,6% - Polylactic acid with composite in the ratio of 0,4-0,6% (H0,4-0,6-PLA0,4-0,6)
10) Paper with composite in the ratio of 0,4-0,6% - Polylactic acid with composite in the ratio of 0,4-0,6% modified with probiotics (H0,4-0,6-PLA0,4-0,6-LP)

There is a more and more interest regarding the use of fibres, probiotics and combinations between them for improving the intestinal microbial composition and, implicit, of the digestive health. Probiotics have a high potential to produce antimicrobial compounds that inhibits and controlle the development of pathogen micro-organisms. The efficiency of the probiotics for health depends on the probiotic strain and on the concentration.

The silver and cristalized TiO₂ nano-particles of nano-sized dimension are, in general, included in the packaging materials because of their anti-microbial function. The effect of the composite Ag-TiO₂ on the gram-positive and gram-negative bacterium is more powerfull comparing to that of the TiO₂ sau de Ag taken separately. Besides the anti-microbial function, it has been demonstrated that this composite also improves the mechanical properties of the *gel* film.

The graphene is considered to be the most robust material with excellent barrier, thermic and mechanical properties.

There are known only information regarding the photo-catalytic performances of the anti-microbial activity and of the using potential in the functioning of the solar cells of the composite material that includes Ag, TiO₂ and graphene. There is no knowledge of it including as an active agent in food packages.

On the other hand, there is known the anti-microbial activity only of the film made of PLA modified with other compounds but not with Ag-TiO₂-graphene. More than this, there is no report on using PLA, respectively paper-PLA modified with Ag-TiO₂-graphene as food packaging material and, especially for fresh cheese or meat as long as there are no studies about active packages made of paper-PLA modified with Ag-TiO₂-graphene and with probiotic strains.

Fresh cheese has been used for testing the preserving activity of the active packages based on PLA obtained in the process according to the invention. It has been cut one package film each having 40 cm/40 cm, in which there have been packaged 50-100 g cheese each. The tests were kept in the refrigerator at 1-10°C for 14 days and the organoleptic, physical-chemical and microbiological characteristics were surveyed.

At the beginning of the experiment, the cheese has a homogeneous external aspect without a any leaks, white color in all the mass, fine consistency, unbreakable, light roughly and a pleasant smell, a lactic fermentation characteristic flavour without strange flavours. After three days of storage, the cheese in all four types of packages did not change the organoleptic characteristics the cheese being exactly as in the 0 day of the experiment. After 10 days of storage, the organoleptic parameters that changed were the color and the smell, but the consistancy remained as in day 0. The color of the test from PLA became light yellow while the color of the cheese in the other packages (PLA0,4-0,6, PLA0,9-1,1) and (PLA2-4) remained unchanged. After 14 days of storage, the organoleptic parameters that changed were the color and the smell. The tests from PLA, PLA0,4-0,6 and PLA0,9-1,1 became light yellow while the color of test PLA2-4 did not change comparing to the cheese in day 0. The variation of the smell are the same as after 10 days storage. The cheese tests storaged for 14 days in all four types of packages fulfill the admisible conditions regarding all the senzorial characteristics provided by the legislation.

**Table 1** presents some results of the physical-chemical experiments taken place during the storage of the fresh cow cheese in packages obtained from the process presented in the invention, after 14 days of storage, in which"+" and "-" mean increasing , respectively decreasing from day 0. The smallest mass loss took place in the case of the test PLA2-4. At the begining of the experiment, the acidity of the fresh cow cheese was 130,2°T. According to the legislation, the fresh cow cheese is safe to be eaten with the maximum admited acidity interval of 160-240°T. This interval has not been reached in any of the packages during 14 days of storage. The lowest variation of the peroxide index was registered in test PLA2-4, while the smallest degradation of the protein and fat was registered in test PLA0,4-0,6.

According to the legislation, the minimum level of dry mass must be 20%. This value was not registered in any of the cheese tests in active packages after 14 days of storage.

Also, the fat content in the fresh cheese must be between 0,1 and 35%. The variation of the fat in the cheese tests is between 5,5 and 2,5%, which proves that, even after 14 days of storage, the cheese in all four types of packages meets the admisible conditions with regard to the fat content.

**Table 1.**

| **Parameter** | **Package** | | | |
|---|---|---|---|---|
| | **PLA** | **PLA0,4-0,6** | **PLA0,9-1,1** | **PLA2-4** |
| **Mass loss (%)** | 8,34 | 11,5 | 10,9 | 7,32 |
| **Acidity (⁰T) (difference from day 0, meaning from 130,2⁰T)** | -73 | -37 | -54 | -63 |
| **Peroxid indicator (mEg/kg) (difference from day 0)** | +14 | +7 | +7 | +6 |
| **Dry substance (%)** | +2 | +2 | +2 | +3 |
| **(difference from day 0)** | | | | |
| **Protein (%)** | -5,5 | -5,3 | -5,4 | -5,6 |
| **(difference from day 0)** | | | | |
| **Fat (%)** | -3,07 | -1,6 | -1,8 | -1,94 |
| **(difference from day 0)** | | | | |

**Table 2** presents the microbiological parameters of fresh cheese measured during storage, in which "+" 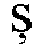 i "-" mean increasing , respectively decreasing from day 0. The lesislation provides that the maximum admited level of total mesophylls must be less than 10⁶ UFC/g, the *Staphylococus* positive coagulase must be less than 100 CFU/g, the *Pseudomonas* spp. colonies must be less than 10⁵ CFU/g, the *Esherichia coli* must not be over 10³ CFU/g, and the *Bacillus cereus* must be less than 10⁴ CFU/g.

The results related to the total level variation of aerobic mesophylls are: after 3 days, the level in tests PLA0,4-0,6 and PLA2-4 is significantly lower than in the test PLA0,9-1,1, and the level in test PLA0,4-0,6 is significantly lower than in test PLA. After 6 days of storage, the number of colonies in test PLA is significantly lower than that in the other packages. After 9 days of storage, the values of the mesophyll number in tests PLA0,4-0,6 and PLA is significantly lower than in test PLA2-4.

The results regarding the variation of the coliforms are: the level increased during the storage in all packages but the level in the cheese test in package PLA and PLA0,4-0,6 was significantly lower than in the other tests.

The results regarding the variation of the *Staphylococus* positive coagulase are: the values registered in test PLA are lower than in the other packages. The variation of the number of colonies in package PLA0,4-0,6 is similar to that in test PLA.

The results regarding the variation of the level of *Pseudomonas spp.* are: after 6 days of storage, the level of the colonies in test PLA is significantly lower than that in test PLA0,9-1,1.

The results regarding the variation of the level of *Bacillus cereus* are: after 6 days of storage, the level of the colonies in test PLA is significantly lower than in the other tests. After 9 days of storage, the level of the strains in tests PLA and PLA0,9-1,1 is significantly lower than in tests PLA2-4 and PLA0,4-0,6.

**Table 2.**

| **Parameter** | **Package** | | | | | | | | | | | | | | | |
|---|---|---|---|---|---|---|---|---|---|---|---|---|---|---|---|---|
| | **PLA** | | | | **PLA0,4-0,6** | | | | **PLA0,9-1,1** | | | | **PLA2-4** | | | |
| | **Storage period (days)** | | | | | | | | | | | | | | | |
| | **3** | **6** | **9** | **14** | **3** | **6** | **9** | **14** | **3** | **6** | **9** | **14** | **3** | **6** | **9** | **14** |
| **Total mesophylls (log CFU/g) (difference from day)** | +2,2 | +2,2 | +3,5 | +4 | +1,8 | +3,2 | +3,5 | +3,8 | +2,5 | +3,2 | +4 | +4 | +2 | +3,2 | +4,2 | +4 |
| **Total coliforms (log CFU/g) (difference from day)** | +0,4 | +1,1 | +3 | +5,6 | +0,4 | +1,6 | +1,8 | +5,4 | +0,9 | +2 | +3 | +6 | +0,8 | +2,6 | +3,6 | +5,6 |
| **Positive coagulase *Staphylococus* (log CFU/g) (difference from day)** | +1 | +2 | +2,5 | +4,2 | +1 | +3 | +3,2 | +4,3 | +1,6 | +3 | +3,5 | +4,5 | +1,5 | +3 | +4,2 | +4,3 |
| ***Pseudomonas* spp. (log CFU/g) (difference from day)** | +2,8 | +4 | +4,5 | +4,5 | +2,5 | +4,5 | +4,5 | +4,5 | +3,2 | +4,5 | +4,5 | +4,5 | +2,8 | +4,5 | +5,2 | +4,5 |
| ***Bacillus cereus* (log CFU/g) (difference from day)** | +0,7 | 0 | +2 | +3,3 | +0,7 | +2 | +3,6 | +3,7 | +1,7 | +3 | +2 | +4,3 | +0,7 | +2 | +3,6 | +4,2 |
| ***Esherichia coli* (log CFU/g) (difference from day)** | +1,5 | +2 | +3,5 | +5 | +0,2 | +3,5 | +3,7 | +4,5 | +1,5 | +3,5 | +3,5 | +5,5 | +1 | +3,5 | +4,5 | +6 |

The results regarding the variation of the level of *Esherichia coli* are: after 3 days of storage, the level of the colonies from PLA0,4-0,6 was lower than that from PLA0,9-1,1. After 6 days of storage, the smallest number of colonies was registered in the package PLA. Later, untill the end of the experiment, the lowest level of the colonies was maintain also in the tests PLA and PLA0,4-0,6.

The level of the anaerobic bacterium, yeasts and molds was below the detection limit during all the time of the experiment in all the paclages.

**Table 3** presents the period, namely the days in which the level of the micro organisms stays in between the maximum admited limit according to the legislation. The packages PLA and PLA0,4-0,6 maintain the fresh cheese for a longer time than the other tested packages. If we take into consideration the number of the total coliforms, the storage period in PLA increased with 2 days comparing to PLA0,9-1,1 and with 2,5 ***days*** comparing to PLA2-4 and the storage in PLA0,4-0,6 is made one day longer than in PLA0,9-1,1 and with 2,5 days longer than in PLA2-4. If all the ***storage*** times are corroborated the conclusion ryptam the packages PLA and PLA0,4-0,6 increase the storage period of the fresh cheese with almost 50% comparing to PLA0,9-1,1 and PLA2-4.

**Table 3.**

| | **Package** | | | |
|---|---|---|---|---|
| | **PLA** | **PLA0,4-0,6** | **PLA0,9-1,1** | **PLA2-4** |
| **Total mesophylls** | 3 | 4,5 | <3 | 4,5 |
| **Total coliforms** | 7 | 6 | 5 | 4,5 |
| **Positive coagulase staphylococcus** | 6 | 4,5 | 3 | 3 |
| ***Pseudomonas* spp.** | 4 | 4 | <3 | 3 |
| ***Bacillus cereus*** | 3 | 3 | 2 | <3 |

For testing the preserving activity of the packages based on paper-PLA obtained using the process according to the invention, fresh meat was used. A quantity of 10-50 g of meat was put in every package of round shape having 20-50 cm in diameter. The piece of meat was put in contact with the surface pf PLA.

The tests were kept into the refrigerator. The microbiological analyses consisted in the determination of the the level of mesophylls, lactic bacterium, enterobacterium, *Pseudomonas, Staphylococus* positive coagulase.

These determinations developed like this: a certain quantity of meat test was homogenised in a digestor together with 90 mL sterile physiological solution, then there were made dilutions that were incubated at 37° C for 24-48 h, with the exception of those for measuring the anaerobic strains.

There was also surveyed the evolution of the biogenic amines, namely ryptamine, 2-phenyl-ethyl-amine, putrescin (PUT), cadaverin (CAD), histamine (HIS), tiramine (TYR), spermidine (SPD) and spermine (SPM). The analyse was made using the chromatographic technic HPLC-DAD, folowing the method described by Sirocchi and collab. The folowings were calculated from the values of the biogenic amines:
- BAI (Biogenic amine indicator): PUT + CAD + HIS + TYR.
- CQI (Chemical quality indicator): (PUT + CAD + HIS) / (1 + SPM +SPD).
- Bas = PUT +CAD + HIS + TYR + 2-PHE + TRY + SPM + SPD.

The sensorial analyse showed that the test H-PLA-LP preserves the aspect of the meat the best for 7 days compared with the other packages having H-PLA structure and this package received the highest score. After 5 days of storage, the highest scores for smell and elasticity were received by the meat storaged in H-PLA0,4-0,6-LP. After 7 days of storage, the package that preserved the color of the meat best was H-PLA0,4-0,6.

**Table 4.**

| **Parameter** | **P*ackage*** | | | | | |
|---|---|---|---|---|---|---|
| | **H-PLA** | **H-PLA-LP** | **H-PLA0,4-0,6** | **H-PLA0,4-0,6-LP** | **H0,4-0,6-PLA0,4-0,6** | **H0,4-0,6-PLA0,4-0,6-LP** |
| **Total mesophylls (log CFU/g)** | +2,5 | +2,5 | +1,8 | +2,5 | +3 | +3 |
| **Lactic bacterium (log CFU/g)** | +0,2 | +2,5 | -1 | +2 | +0,3 | +2 |
| **Enterobacterium (log CFU/g)** | +3,5 | +4 | +3,5 | +3,5 | +3,5 | +4 |
| **Pseudomonas (log CFU/g)** | +3,2 | +5 | +3 | +3 | +5 | +5 |
| **Positive coagulase staphylococcus (log CFU/g)** | +1,8 | +2,4 | +1,8 | +1,8 | +3 | +3,2 |
| **BAI (mg/kg)** | +750 | +1150 | +650 | +1200 | +2350 | +1150 |
| **CQI (mg/kg)** | +1,55 | +1,3 | +1,1 | +1,9 | +3,55 | +3,2 |
| **BAs (mg/kg)** | +760 | +1220 | +700 | +1200 | +2500 | +2000 |

**Table 4** presents ***microbiological*** and chemical parameters of the chicken meat after 7 days of storage in the refrigerator. The values are showed compared to day 0 of the experiment and "+" 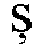 i "-" mean increasing, respectively decreasing from day 0, the only biogenic amine in accordance with regulation being the histamine whose maximum level in meat and fish must be between 200 and 400 mg kg⁻¹. The level of the histamine of the chicken meat tests did not exceed the maximum ***admitted*** value not even after 7 days of storage.

The results regarding the variation of the ***total*** level of aerobic mesophylls are: after 2 days of storage, the level of the mesophylls in the test H-PLA0,4-0,6 was significantly lower than in the other tests, being followed by H-PLA and H0,4-0,6-PLA0,4-0,6. After 5 days of storage, the lowest level of ***mesophylls*** was measured in H-PLA0,4-0,6 and H-PLA and after 7 days of storage, the test H-PLA0,4-0,6 allowed the development of the lowest number of colonies.

The results regarding the variation of the total level of lactic bacterium are: the lowest number of lactic bacterium developed in the tests H-PLA0,4-0,6, H-PLA and H0,4-0,6-PLA0,4-0,6 after 2, 5 and 7 days of storage.

The results regarding the variation of the level of enteriobacterium are: after 2 days of storage, the lowest level was found in H-PLA0,4-0,6-LP, followed by H-PLA0,4-0,6. This effect did not appear after the 5th day when H-PLA0,4-0,6 had the lowest level of enteriobacteriaceae. In the last day of the experiment, the most efficient package was H-PLA0,4-0,6.

The results regarding the variation of the level of *Pseudomonas* spp. are: after 7 days of storage, the lowest level of colonies was found in the test H-PLA0,4-0,6-LP. So, this package maintains the chicken meat in safe condition up to 2 days.

The results regarding the variation of the level of positive-coagulase staphylococcus are: after 5 and 7 days of storage, the most efficient packages are H-PLA, H-PLA-LP, H-PLA0,4-0,6 and H-PLA0,4-0,6-LP.

The level of *Escherichia coli,* anaerobic bacterium and *Clostridium perfringens* was below the detection limit during the experiment.

The results regarding the variation of BAI are: after 7 days of storage, the lowest indicator was found in H-PLA0,4-0,6 and H-PLA0,4-0,6-LP.

The results regarding the variation CQI are: after 5 days of storage, the lowest quality indicator was measured in H-PLA-LP and H-PLA0,4-0,6-LP.

The results regarding the variation of BAs are: the tests H-PLA and H-PLA0,4-0,6 preserved the meat tests most efficiently and redused the ***rate*** of growing of the biogene amines and, implicitly, the degradation of the proteins in meat the most.

The microbiological analyses showed that the meat tests can be kept in safe conditions in H-PLA for 6 days, in H-PLA-LP and H-PLA0,4-0,6 for 3,5 d H-Plys and in A***H-PLA-LP*** for 4,5 days.

Hereinafter, there is presented an practical example of the process for obtaining food active packages based on polylactic acid, ***according*** to the invention.

The process for obtaining active food packages based on polylactic acid, respectively the structure paper-polylactic acid, according to the invention, has the following steps: the obtaining of a nano-structured composite, the obtaining of the composition PLA modified with nano-structured composite and the obtaining of active packages.

With regard to the nano-structured composite of Titan dioxide modified (Ag-TiO₂-GN 0,01-0,03 II tt) with graphene (GN) (0,01-0,03 g/10-30 g gel) and with silver nano-particles (0,03-0,05g/ 10-30 g gel), the obtaining process has the following steps: the Titan dioxide (TiO₂) (10-30g) ***sol*** is prepared using the ***sol***-gel in acid ***catalysis*** method using as a source for Ti the Titan tetra- isopropoxide (Ti(O-*i*Pr)₄), hydrolysed by ultrapure water in the presence of azotic acid as catalyzer using as a reaction medium the absolute ethanol. A black gel is obtained in this way. After ***aging,*** the gel of Titan dioxide - graphene is put in 15-35 mL solution of lunar caustic 0,005-0,025M for 24-48 h. Afterwards, the gel is - dried at 50-70°C up to a constant mass, the difference between two weighing is smaller than 0,0002g and is thermal treated at 400-600°C 2-5h at an incresing/ decreasing speed of the temperature of 4-10°C/minute.

The process for obtaining active packages based on polylactic acid has the following steps: irst of all, the granules of PLA modified with nano-structured composite of Titan dioxide (TiO₂) modified with graphene (GN) (0,01-0,03 g/10-30 g gel) and with silver nano-particles (Ag)(0,03-0,05g/10-30 g gel) (Ag-TiO₂-GN 0,01-0,03 II tt) in a ratio of 0,4-4 %.

The granules of PLA are ***dried*** at 55-75°C for 4-8 h, the nano-structured composite is crushed down in balls mill at a rotative speed of 600-900 rpm for 2-10 minute in order to get to a suitable dimension for an homogeneous inclusion in PLA and not to form particles agglomeration.

In order to be possible to incorporate nano-structured composite in PLA, the granules of PLA are split in three fractions while the nano-structured composite is separated in the matrix. After adding the nano-structured composite in the granules of PLA, the mix is heated up to 170-200°C for 12-16 minutes and than it is cooled to the room's temperature. After each homogenization, we obtain 100-200g PLA2-4. The process is repeated till we obtain 5-7 kg material. Then, this material is transformed in granules through cutting and extrusion. In order to obtain granules of PLA0,9-1,1, 1-2 kg of PLA2-4 are mixed with 2-4 kg PLA and for obtaining PLA0,4-0,6, 1-2 kg PLA0,9-1,1 are combined with 1-3 kg PLA.

The image of the granules of PLA2-4, PLA0,9-1,1 and PLA0,4-0,6 modified with nano-structured composite is presented in **Picture 1.** The active package film is obtained through extrusion at a temperature of 170-210°C. A balloon with film is obtained in this way and this is cut afterwards. This is how the packages PLA, PLA0,4-0,6, PLA0,9-1,1, PLA2-4 are obtained.

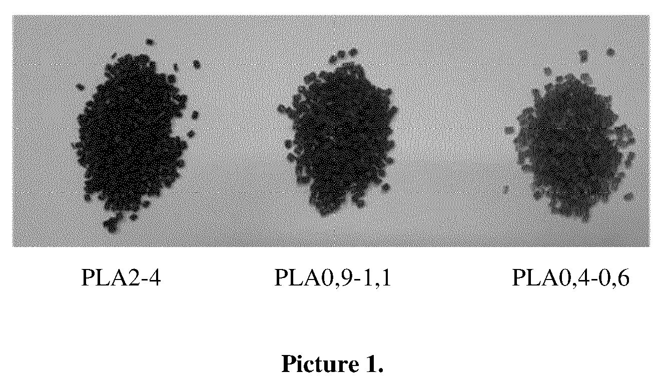

The process for obtaining active packages with the structure paper - polylactic acid modified with nano-structured composite has the following steps:
- PLA and PLA0,4-4 are prepared following the process mentioned before
- The paper is obtained from two kinds of cellulose, one with long fibre and one with short fibre, 1% solution of ***starch,*** filling agent (CaCO₃), sticking agent, retension agent. The celluloses are crushed down in the plant for preparing the paste of the paper machine to a consistency of 3-7%. The apparatus for making sheets is setted for drying this type of paper to 5-15 minutes. A quantity of 50-100g/m² is chosen.

- The paper with composite is obtained by introducing the crushed down nano-structured composite in the homogenizer according to the calculated quantity after the celluloses are mixed up to a consistency of 1-10%. The composite is uniformly distributed in the paper paste and there have not been observed any significant aspects with regard to the behaviour of the paper paste.
- the sandwich structure of type H-PLA is obtained by hot-pressing the PLA ***film*** on the paper support at aproximately 50 °C.

The covering with probiotics of the active packages with H-PLA structure is made by spraying. The strains of *Lactobacillus plantarum* **IMC 509** are used. The H-PLA sheets are sterilized with a sun lamp with (UV) for 2-5 h before spraying. Then, a quantity of 0,01-0,1g *Lactobacillus plantarum* IMC 509 lyophylized powder is put on the scale after it has been dissolved in 50-100 mL of buffer of sterile phosphate and the mix has been homogenized. The solution is equally sprayed on the H-PLA and than it is ***dried*** in a controlled atmosphere at 37°C and it is sterilized under a laminar flow of air.

**Example 1.** For storing fresh cow cheese in the refrigerator, we use a package from lolylactic acid (PLA) in the shape of a foil. The results have indicated that the cheese is kept in this package for 14 days in the refrigerator because the maximum admited values corespondent to the sensory analyse, namely the water, fat and acidity content, fat and acidity was not excedeed. The maximum admited level of mesophylls and of *Baccilus cereus* was exceeded after 3 days, that of the coliforms after 7 days, that of the positive-coagulase staphylococcus after 6 days and that of *Pseudomonas* spp. after 4 days.

**Example 2.** For storing fresh cow cheese in the refrigerator, we use a package made from ***polylactic*** acid in the shape of a foil in which a nano-structured composite is incorporated in the ratio of 0,4-0,6% (PLA0,4-0,6). The results indicated that the cheese can be kept in this package for 14 days in the refrigerator because the maximum admited values corespondent to the sensory analyse, namely the water, fat and acidity content was not excedeed. The maximum admited level of mesophylls and of positive - coagulase staphylococcus was exceeded after 4,5 days, that of the coliforms after 6 days, that of the *Pseudomonas* spp. after 4 days and that of *Baccilus cereus* after 3 days.

**Example 3.** For storing fresh cow cheese in the refrigerator, we use a package made from ***polylactic*** acid in the shape of a foil in which a nano-structured composite is incorporated in the ratio of 0,9-1,1% (PLA0,9-1,1). The results indicated that the cheese can be kept in this package for 14 days in the refrigerator because the maximum admited values corespondent to the sensory analyse, namely the water, fat and acidity content was not excedeed. The maximum admited level of mesophylls and of *Pseudomonas* spp. was exceeded after less than 3 days, that of the coliforms after 5 days, that of the positive - coagulase staphylococcus after 3 days and that of *Baccilus cereus* after only 2 days.

**Example 4.** For storing fresh cow cheese in the refrigerator, we use a package made from ***polylactic*** acid in the shape of a foil in which a nano-structured composite is incorporated in the ratio of 2-4% (PLA2-4). The results indicated that the cheese can be kept in this package for 14 days in the refrigerator because the maximum admited values corespondent to the sensory analyse, namely the water, fat and acidity content was not excedeed. The maximum admited level of mesophylls and of coliforms was exceeded after 4,5 days, that of the positive - coagulase staphylococcus, *Pseudomonas* spp. and *Baccilus cereus* after 3 days.

**Example 5.** For storing chicken meat in the refrigerator, we use an active package H-PLA0,4-0,6. The results indicated that, after 7 days of storage, this package preserved the color of the meat the best. Also, the lowest number of colonies of mesophylls, lactic bacterium, enterobacteriaceae, positive-coagulaza staphylococcus and biogen amines indicator (BAI and BAs) was found in this package after 7 days. The chicken meat can be stored in the refrigerator in this package for 3,5 days in safe feeder conditions.

**Example 6.** For storing chicken meat in the refrigerator, we use an active H-PLA0,4-0,6-LP. After 5 days of storage, the highest scores for smell and elasticity were received by the meat stored in this package. After 7 days of storage, the lowest level of colonies of *Pseudomonas* spp. Was was measured in this package and also the lowest indicators BAI and CQI. The chicken meat can be stored in safe feeder conditions in the H-PLA0,4-0,6-LP for 4,5 days.

## Claims

1. Process for obtaining an active package based on polylactic acid **wherein,** 10-100g of granules of polylactic acid are added to a nano-structured composite so that the mass ratio of the composite in the package is 0,4-4% doing as follows: first of all, there are made the PLA granules modified with nano-structured composite of Titan dioxide modified (Ag-TiO₂-GN 0,01-0,03 II tt) with graphene (GN) (0,01-0,03 g/10-30 g gel) and with silver nano-particles (0,03-0,05g/ 10-30 g gel); then, on the foil PLA0,4-4 it is put by hot-pressing at 50°C a sheet of paper (H) obtained from two types of celluloses, one with long fibre and one with short fibre, 1% solution of amidon, filling agent (CaCO₃), sticking agent, retention agent; then, the structure H-PLA0,4-4 is covered with probiotics by spraying using the strain *Lactobacillus plantarum.*

2. Process for obtaining an active package based on polylactic acid according to claim 1, **wherein,** the granules of PLA modified with nano-structured composite are obtained as follows: the granules PLA are dried at 55-75°C for 4-8 h, the nano-structured composite is crushed down in a balls mill at a rotative speed of 600-900 rpm for 2-10 minutes, then the mix of PLA granules is heated up to 170-200°C for 12-16 minutes and homogenized, then, it is cooled to the room's temperature and 100-200g PLA2-4 are obtained, then, the process is repeated till we obtain 5-7 kg material, after it this material is transformed in granules through cutting and extrusion, then the granules PLA0,9-1,1 are obtained by mixing 1-2 kg of PLA0,9-1,1 with 1-2 kg PLA after which the active package film is obtained by extrusion at 170-210°C and a balloon of film is formed and it is cut.

3. Process for obtaining an active package based on polylactic acid according to claim 1, **wherein,** the nano-structured composite of Titan dioxide modified (Ag-TiO₂-GN 0,01-0,03 II tt) with graphene (GN) (0,01-0,03 g/10-30 g gel) and with silver nano-particles (0,03-0,05g/ 10-30 g gel), is prepared as follows: the Titan dioxide (TiO₂) (10-30g) soil is prepared using the soil-gel in acid chatalysis method using as a source for Ti the Titan tetra- isopropoxide (Ti(O-*i*Pr)₄), hydrolysed by ultrapure water in the presence of azotic acid as catalyzer using as a reaction medium the absolute ethanol, after which 0,01-0,03 g of graphene powder are added by agitating till the graphene particles are dispersed in the soil followed by jellification and a black gel is obtained, then after ageing, the gel of Titan dioxide - graphene is put in 15-35 mL solution of lunar caustic 0,005-0,025M for 24-48 h, afterwards, the gel is dried at 50-70°C up to a constant mass, namely the difference between two weighing is smaller than 0,0002g and then it is thermal treated at 400-600°C 2-5h at an increasing/ decreasing speed of the temperature of 4-10°C/minute.

4. Process for obtaining an active package based on polylactic acid according to claim 1, **wherein,** th H-PLA structures are sterilized by irradiation with (UV) for 2-5 h before spraying, then, a quantity of 0,01-0,1g *Lactobacillus plantarum* IMC 509 lyophilized powder is measured after it has been dissolved in 50-100 mL of buffer of sterile phosphate and the mix has been homogenized, then the solution is equally sprayed on the H-PLA and than it is dried in a controlled atmosphere at 37°C and it is sterilized under a laminar flow of air.
